# FASCICULE DE BREVET EUROPEEN

(11) **EP 0 843 836 B1**
(45) Date de publication et mention de la délivrance du brevet: **16.06.1999**
(21) Numéro de dépôt: 96927746.6
(22) Date de dépôt: 06.08.1996
(51) Int. Cl.: G02B 27/09, B23K 26/06, G02B 3/00

(54) **DISPOSITIF OPTIQUE POUR HOMOGENEISER UN FAISCEAU LASER**
OPTISCHE VORRICHTUNG ZUR HOMOGENISIERUNG EINES LASERSTRAHLES
OPTICAL DEVICE FOR HOMOGENISING A LASER BEAM

(30) Priorité: 11.08.1995 FR 9509781
(43) Date de publication de la demande: 27.05.1998
(73) Titulaire: Société de Production et de Recherches Appliquées, 92270 Bois-Colombes (FR)
(72) Inventeur: GODARD, Bruno, F-91940 Les Ulis (FR); STEHLE, Robert, F-92250 La Garenne (FR)
(74) Mandataire: Nicolle, Olivier
(86) Numéro de dépôt international: FR9601251
(87) Numéro de publication internationale: WO9707423

(56) Documents cités:
- EP-A- 0 266 120
- CN-A- 1 052 956
- DE-A- 3 634 847
- DE-A- 4 220 705
- US-A- 5 253 110
- US-A- 5 363 240
- PATENT ABSTRACTS OF JAPAN vol. 14, no. 67 (E-885) [4010] , 7 Février 1990 & JP,A,01 286478 (HITACHI), 17 Novembre 1989,

## Description

La présente invention concerne un dispositif pour homogénéiser un faisceau laser.

Elle trouve une application générale dans tout domaine technique utilisant un laser, et notamment dans le traitement de surface par laser, tel que le recuit de silicium amorphe, le nettoyage, le polissage et la préparation de surface, notamment.

D'une façon générale, la répartition énergétique selon la section droite d'un faisceau laser, au moins dans l'ordre d'émission le plus bas, est d'allure gaussienne, en tout cas variable selon la section droite du faisceau.

Or, pour obtenir, par exemple, un recuit optimal de silicium amorphe, il est nécessaire d'appliquer un faisceau laser ayant une répartition énergétique homogène et sensiblement uniforme.

Cette homogénéité est surtout requise lorsque l'échantillon à traiter par laser est de grande taille (comme cela est décrit dans la Demande de Brevet français FR-A-2 737 806 intitulée "Dispositif et procédé de traitement de surface par laser", déposée au nom du Demandeur le 11 août 1995 sous le N° 95 09778). Elle est également exigée lorsque le faisceau laser incident est une combinaison de plusieurs faisceaux laser émanant d'une chaîne de modules laser agencés en parallèle et/ou en série (comme cela est décrit dans la Demande de Brevet français FR-A-2 737 814 intitulée "Procédé et dispositif de commande d'une source laser à plusieurs modules laser pour optimiser le traitement de surface par laser", déposée également au nom du Demandeur le 11 août 1995 sous le N° 95 09780).

On connaît déjà des moyens permettant d'homogénéiser un faisceau laser.

Par exemple, le document EP-A-0 266 120 ou le document US-A-5 253 110 décrit un homogénéiseur qui comprend une matrice de lentilles frontales, jointives, disposées en m lignes et n colonnes, perpendiculairement à la direction de propagation du faisceau laser à traiter, et propres à découper ledit faisceau laser en m x n faisceaux laser ayant chacun une section transversale de forme géométrique sensiblement uniforme, et une répartition énergétique sensiblement homogène dans la section.

Dans le document EP-A-0 266 120, au moins une lentille de collection, convergente, disposée perpendiculairement à la direction de propagation du faisceau de lumière, en aval des lentilles frontales selon le sens du cheminement du faisceau laser focalise dans une zone déterminée d'un plan choisi les faisceaux issus des lentilles frontales.

Dans le document EP-A-0 266 120, la matrice de lentilles est issue d'une seule pièce usinée au format de ladite matrice. Elle permet d'obtenir une pluralité de faisceaux laser ayant chacun une intensité uniforme et sensiblement identique.

L'inconvénient d'une telle matrice de lentilles, formée d'une seule pièce est de rendre nécessaire le changement de la totalité de la matrice lorsque seulement l'une des lentilles est défectueuse. De plus, le format de la matrice et le nombre de lentilles sont figés. Une telle matrice ne peut donc s'adapter qu'à une seule taille de faisceau laser à homogénéiser.

On connaît des lentilles assemblées par collage (CN-A-1 052 956) mais cet assemblage ne traite pas la totalité des faisceaux lumineux en raison de la colle disposée sur la totalité de la surface latérale des faces des lentilles mises bord à bord.

On connaît aussi des lentilles assemblées individuellement par serrage dans des logements (DE-A-3 634 847) mais cet assemblage perturbe aussi la marche des faisceaux lumineux en raison des intervalles qui séparent les lentilles.

La présente invention apporte une solution à ces problèmes.

Elle porte sur un dispositif optique pour homogénéiser un faisceau laser selon la revendication 1.

Selon l'invention, il comprend des moyens d'assemblage par collage et/ou serrage propres à assembler individuellement, bord à bord, et sans interstice, les lentilles frontales les unes aux autres, lesdits moyens d'assemblage comprenant de la colle et/ou des éléments de serrage ainsi que des rainures et/ou chanfreins ménagés dans les lentilles pour servir de logement à ladite colle et/ou auxdits éléments de serrage, de telle sorte que lesdits moyens d'assemblage ne perturbent pas la marche des faisceaux lumineux traversant lesdites lentilles frontales ainsi assemblées.

Un tel dispositif permet de remplacer une lentille frontale défectueuse sans changer tout l'ensemble des lentilles frontales. Il permet aussi d'améliorer la maintenance desdites lentilles ainsi que leur adaptation à des faisceaux laser de différentes tailles. Il permet surtout d'assembler individuellement des lentilles sans pertes de lumière et sans perturber la marche des faisceaux lumineux grâce aux rainures et/ou chanfreins qui suppriment les interstices en servant de logement à la colle et/ou aux éléments de serrage.

Le dispositif selon l'invention trouve ainsi une application avantageuse lorsque le faisceau à homogénéiser est une combinaison de plusieurs faisceaux laser émanant d'une chaîne de modules laser mis en série et/ou en parallèle.

En pratique, chaque lentille frontale est de forme générale parallélépipédique avec une face d'entrée, une face de sortie et quatre faces latérales. Dans ce cas, au moins une face latérale d'une lentille frontale destinée à être assemblée à une face latérale d'une lentille frontale adjacente comprend une rainure transversale et/ou un chanfrein respectivement ménagés à proximité de et/ou sur la face de sortie de ladite lentille frontale.

Selon un premier mode de réalisation de l'invention, les moyens d'assemblage sont par collage, les rainures et/ou chanfreins étant destinés à servir de réservoir de colle afin d'éviter de perturber la marche des faisceaux lumineux qui traversent les lentilles ainsi collées.

Selon un second mode de réalisation de l'invention, les moyens d'assemblage sont par serrage, les rainures et/ou chanfreins étant destinés à l'insertion d'un fil ou d'une tige solidaire d'un cadre entourant la pluralité de lentilles frontales.

Selon un autre aspect de l'invention, les moyens d'assemblage comprennent une grille possédant une pluralité de barreaux de faible largeur par rapport à celle des lentilles frontales et sur lesquels les faces de sortie et/ou les chanfreins des lentilles frontales sont appliqués par collage et/ou serrage.

En pratique, les lentilles frontales sont du type convexe-plan, biconvexe ou convexe-concave, et convergentes ou divergentes.

D'autres avantages et caractéristiques de l'invention apparaîtront à la lumière de la description détaillée ci-après et des dessins dans lesquels:
- la figure 1 est une représentation schématique des moyens essentiels d'un homogénéiseur;
- la figure 2 est une variante de l'homogénéiseur décrit en référence à la figure 1;
- la figure 3 est un homogénéiseur à deux lentilles de collection;
- la figure 4 illustre l'assemblage par collage des lentilles frontales du type convexe-plan selon l'invention;
- la figure 5 illustre l'assemblage par collage des lentilles frontales du type convexe-concave selon l'invention;
- la figure 6 illustre l'assemblage par serrage et/ou collage des lentilles frontales du type convexe-plan selon l'invention; et
- la figure 7 illustre l'assemblage par serrage et/ou collage des lentilles frontales du type convexe-concave selon l'invention.

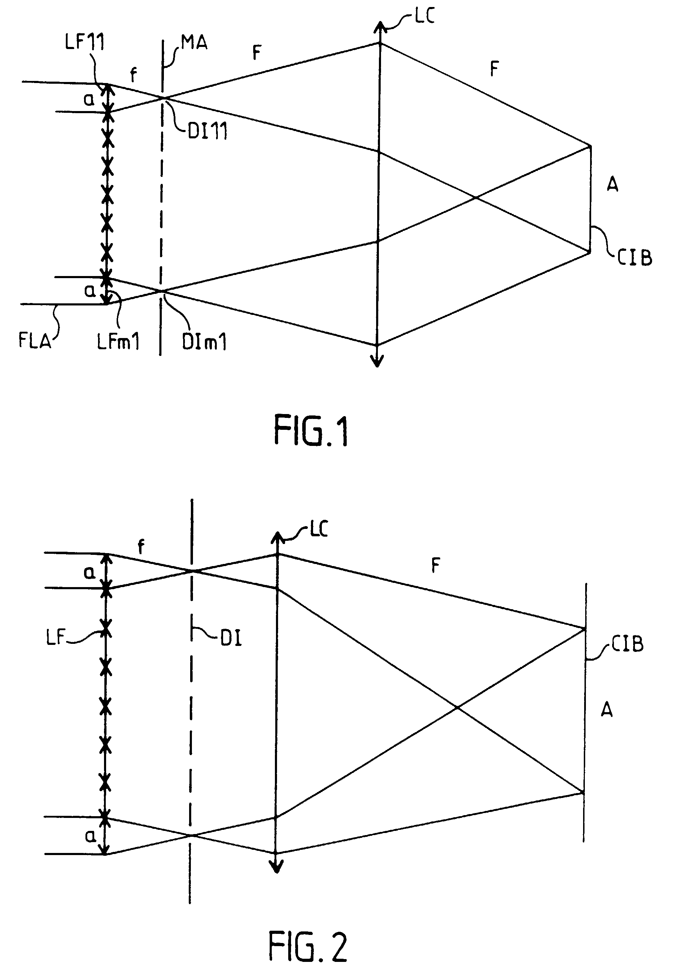

Sur la figure 1, la référence FLA désigne le faisceau laser à homogénéiser. Ce faisceau laser a une répartition énergétique non uniforme en section droite. Il émane par exemple d'un laser ou d'une chaîne de modules laser mis en parallèle ou en série.

Par exemple, ce faisceau laser est destiné au recuit du silicium amorphe par laser. Une application consiste à illuminer un panneau de grande taille de silicium amorphe pour la fabrication d'écrans plats à cristaux liquides. Ce faisceau laser est appliqué sur le plan cible CIB portant l'échantillon à traiter.

Le dispositif optique pour homogénéiser un faisceau laser comprend ici m x n lentilles frontales LF, jointives, disposées en m lignes et n colonnes perpendiculairement (transversalement) à la direction de propagation du faisceau laser à traiter. m et n sont des nombres entiers, par exemple m et n sont égaux à 7. Les lentilles frontales sont agencées selon une matrice rectangulaire droite ou oblique. Par exemple, elles sont régulièrement distribuées à l'intérieur d'un rectangle ou d'un parallélogramme.

Ces lentilles découpent le faisceau laser FLA en m x n faisceaux laser ayant chacun une section transversale sensiblement uniforme et une répartition énergétique sensiblement homogène.

Il est prévu une lentille de collection LC, convergente, disposée perpendiculairement à la direction de propagation du faisceau de lumière, en aval des lentilles frontales LF selon le sens de cheminement du faisceau laser. Cette lentille de collection est propre à focaliser, dans le plan cible CIB, les faisceaux issus des lentilles frontales.

Avantageusement, m x n diaphragmes DI sont associés respectivement aux m x n lentilles frontales. Chaque diaphragme est disposé sensiblement dans le plan focal objet de la lentille associée et reçoit le faisceau de lumière issu de la lentille frontale associée afin de le filtrer spatialement.

La référence "a" désigne la largeur d'une lentille frontale LF. La référence f désigne la distance focale (proche du tirage) entre une lentille frontale et le diaphragme associé DI. La référence F désigne la distance (qui peut être différente de la distance focale) entre un diaphragme DI et la lentille de collection LC. La référence A désigne la largeur du faisceau laser homogénéisé obtenu par l'homogénéiseur HO au niveau du plan CIB. La dimension A est égale à a x F / f.

Chaque diaphragme DI comprend une ouverture de forme et dimensions choisies, par exemple circulaire. Un support ou masque MA maintient la pluralité de diaphragmes.

Les lentilles frontales sont par exemple du type convexe-plan, biconvexe, ou convexe-concave, et convergentes ou divergentes.

Il est ici fait en sorte que la section transversale du faisceau de lumière issu de chaque lentille frontale est rectangulaire ou hexagonale, en aval des diaphragmes.

Lorsque la lentille de collection LC est de petit diamètre, le dispositif optique est moins coûteux et présente moins d'aberrations optiques qu'avec une lentille de collection de grande taille.

Sur la figure 2, la lentille de collection LC est disposée de telle sorte que le plan focal des lentilles LF n'est pas confondu avec celui de la lentille de collection LC. Cette variante confère une réduction de l'encombrement du dispositif homogénéiseur.

La marche des rayons lumineux montre ici que le dispositif homogénéiseur n'est pas nécessairement afocal.

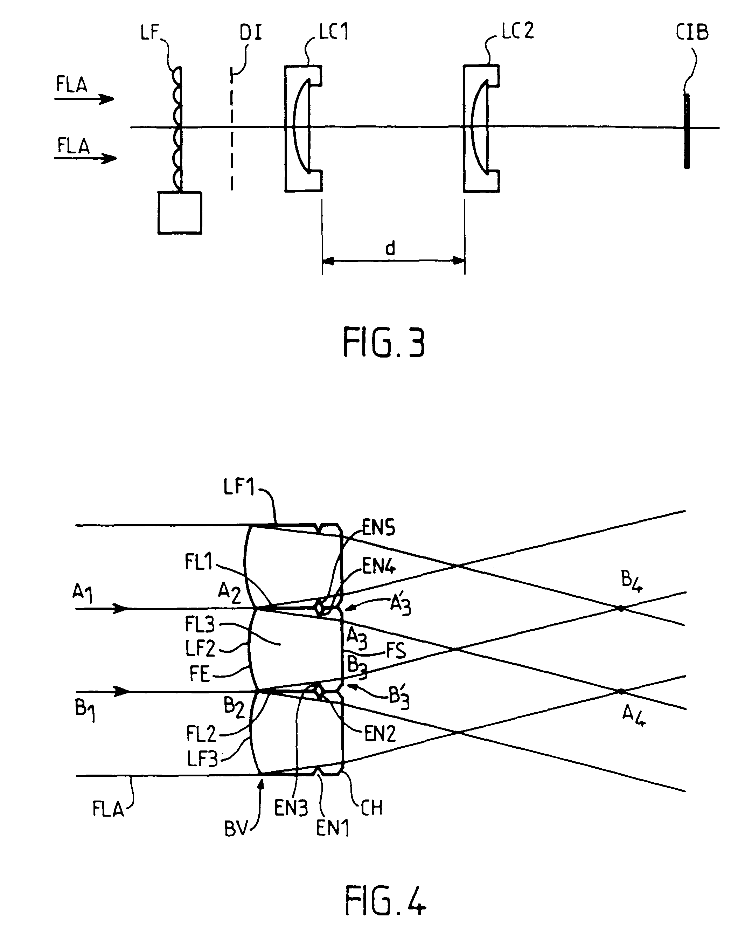

En référence à la figure 3, la lentille de collection LC est remplacée par deux lentilles LC1 et LC2, convergentes, disposées perpendiculairement à la direction de propagation du faisceau de lumière, en aval des lentilles frontales LF et des diaphragmes DI associés.

Ces lentilles de collection LC1 et LC2 sont mobiles en translation selon l'axe optique.

On fait varier la distance d entre les deux lentilles LC1 et LC2 pour faire varier la focale résultante et obtenir au niveau du plan cible CIB une taille de faisceau homogénéisé adaptée à l'application choisie, par exemple la taille des panneaux à traiter dans le cas d'un recuit de silicium amorphe.

Il est à remarquer que les autres éléments optiques, à savoir les lentilles frontales LF, les diaphragmes DI et le plan cible CIB peuvent aussi être mobiles en translation selon l'axe optique.

Le choix des distances relatives entre les différents éléments optiques permet non seulement d'adapter la taille du faisceau laser homogénéisé à l'application choisie (possibilité de choisir le grandissement en faisant varier la distance d), mais aussi de réduire l'encombrement du dispositif homogénéiseur.

Il est à remarquer également que le choix de la distance d permet aussi d'ajuster l'énergie par unité de surface délivrée par le faisceau laser, comme cela est décrit dans la Demande de Brevet déposée par le Demandeur pour "Procédé et dispositif de commande d'une source laser à plusieurs modules laser pour optimiser le traitement de surface par laser" et déjà mentionnée ci-avant.

Sur la figure 4, on a représenté la marche de plusieurs faisceaux à travers plusieurs lentilles frontales LF d'une même ligne m. Pour faciliter la compréhension de l'invention, seulement trois lentilles frontales sont schématisées les unes à côté des autres. Ces lentilles frontales sont par exemple de type convexe-plan. Elles sont de forme générale parallélépipédique avec une face d'entrée FE, une face de sortie FS et quatre faces latérales FL1 à FL4. La partie convexe (face d'entrée) reçoit le faisceau laser à traiter FLA. Une face latérale d'une lentille frontale est définie par exemple par les points A2, A'3, B'3 et B2 pour la face latérale FL3 de la lentille centrale LF2.

Le faisceau laser à traiter issu du point A1 est appliqué sur la lentille centrale LF2 au niveau du point A2. Ce faisceau traverse la lentille frontale LF2 jusqu'au point A3 pour être ensuite acheminé vers le point A4. Il est à remarquer que le point A3 est légèrement décalé par rapport au point A'3.

La partie convexe d'une lentille frontale comprend ici deux bords vifs tels que BV.

Selon l'invention, la lentille frontale LF2 comprend une rainure EN4 de faible profondeur ménagée transversalement dans la face latérale FL1.

De même, la lentille frontale LF2 comprend une rainure EN3 de faible profondeur ménagée transversalement dans la face latérale FL2.

De préférence, les rainures sont ménagées à proximité de la face de sortie de la lentille frontale.

Il en est de même pour les autres lentilles frontales.

Les deux lentilles frontales adjacentes LF2 et LF3 sont accolées l'une à l'autre. La coopération des rainures EN3 et EN2 respectives permet un collage desdites lentilles par application de colle dans lesdites rainures EN3 et EN2, sans perturDation des propriétés optiques des faisceaux lumineux traversant lesdites lentilles frontales LF2 et LF3.

La marche du faisceau B1 à travers la lentille frontale centrale LF2 passe selon les points B2, B3 et B4.

Il est à remarquer avantageusement que le chemin lumineux n'est pas perturbé par les rainures EN et les chanfreins CH.

Les lentilles frontales sont de forme générale rectangulaire ou hexagonale avec des côtés d'une longueur de l'ordre de 1cm.

Par exemple, le faisceau à homogénéiser FLA est rectangulaire avec des côtés de l'ordre de 5 à 8 cm.

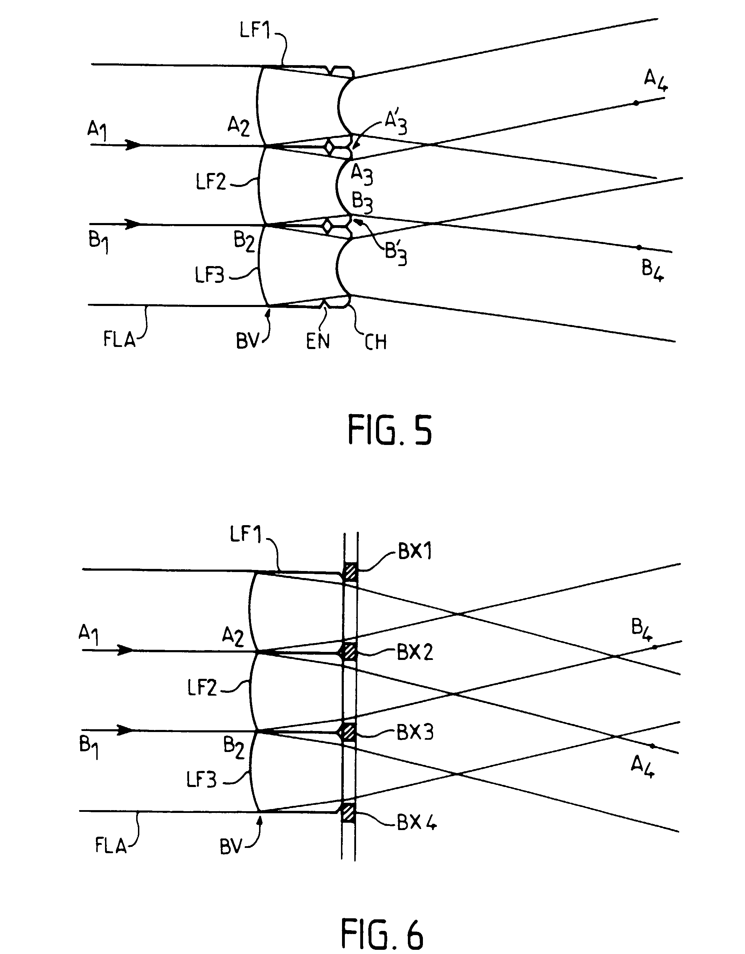

En référence à la figure 5, l'assemblage par collage des lentilles frontales selon l'invention peut s'appliquer aussi à des lentilles frontales divergentes du type convexe-concave.

Il est à remarquer que les rainures décrites en référence aux figures 4 et 5 peuvent aussi servir à l'insertion de fil ou tige (non représenté) solidaire d'un cadre (non représenté) entourant la matrice de lentilles frontales. Ces fils ou tiges ainsi insérés dans les rainures permettent de juxtaposer et solidariser les lentilles frontales. Ces fils ou tiges peuvent être insérés et maintenus dans les rainures par collage et/ou serrage.

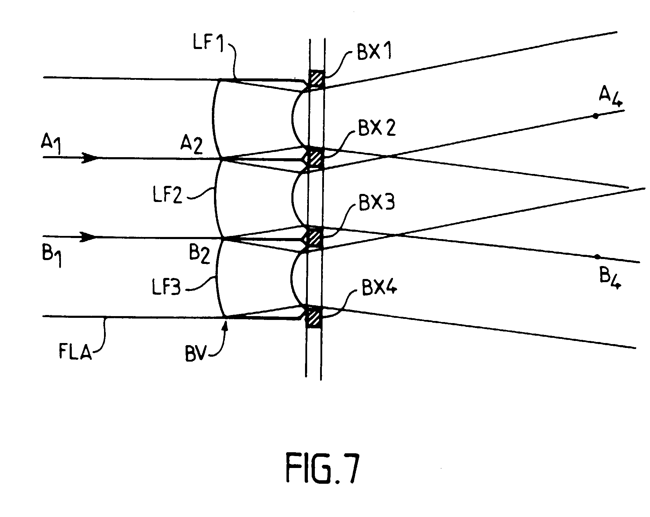

En référence aux figures 6 et 7, les moyens d'assemblage comprennent une grille possédant une pluralité de barreaux, représentés ici en B X 1 à B X 4, de faible largeur par rapport à celle des lentilles frontales, et sur lesquels sont appliquées par collage et/ou serrage les faces de sortie des lentilles frontales.

Les rainures EN décrites en référence aux figures 4 et 5 peuvent être avantageusement supprimées dans l'assemblage conforme aux figures 6 et 7.

Sur la figure 6, les lentilles frontales sont convergentes et du type convexe-plan.

En variante, selon la figure 7, les lentilles frontales sont divergentes et du type convexe-concave.

Il est question dans ce qui précède d'homogénéiser le faisceau laser obtenu en sortie. Bien que des applications importantes impliquent l'obtention d'un faisceau dont la densité d'énergie par unité de surface soit uniforme en section droite, il est clair que le mot "homogénéiser" n'implique pas nécessairement l'égalité de la densité d'énergie sur toute le section droite, mais s'étend au contraire à l'obtention de toute distribution voulue de cette densité d'énergie.

## Revendications

1. Dispositif optique pour homogénéiser un faisceau laser (FLA) émanant d'une source selon une direction de propagation prédéterminée, ledit dispositif comprenant une pluralité de lentilles frontales (LF), jointives, disposées sur un plan en m lignes et n colonnes et propres à découper le faisceau laser à homogénéiser se propageant perpendiculairement audit plan en m x n faisceaux laser ayant chacun une section transversale de forme géométrique uniforme ainsi qu'une distribution spatiale de l'intensité lumineuse homogène dans la section, caractérisé en ce qu'il comprend des moyens d'assemblage par collage et/ou serrage propres à assembler, individuellement, bord à bord et sans interstice les lentilles frontales les unes aux autres, lesdits moyens d'assemblage comprenant de la colle et/ou des éléments de serrage ainsi que des rainures (EN) et/ou chanfreins (CH) ménagés dans les lentilles (LF) pour servir de logement à ladite colle et/ou auxdits éléments de serrage de telle sorte que lesdits moyens d'assemblage ne perturbent pas la marche des faisceaux lumineux traversant lesdites lentilles frontales (LF) ainsi assemblées.

2. Dispositif selon la revendication 1, caractérisé en ce que chaque lentille frontale est de forme générale parallélépipédique avec une face d'entrée (FE), une face de sortie (FS) et quatre faces latérales (FL1 - FL4).

3. Dispositif selon la revendication 2, caractérisé en ce qu'au moins une face latérale (FL1) d'une des lentilles frontales (LF2) destinée à être assemblée à une face latérale d'une lentille frontale adjacente (LF1) comprend une rainure transversale (EN4) et/ou un chanfrein (CH) ménagés respectivement à proximité de et/ou sur la face de sortie (FS) de ladite lentille frontale (LF2).

4. Dispositif selon la revendication 1, caractérisé en ce que les éléments de serrage comprennent un cadre entourant la pluralité de lentilles frontales (LF) ainsi que des fils et/ou tiges solidaires dudit cadre et logés dans les rainures (EN) ménagées à proximité des faces de sortie des lentilles frontales.

5. Dispositif selon la revendication 1, caractérisé en ce que les moyens d'assemblage comprennent une grille possédant une pluralité de barreaux (B X 1 - B X 4) de faible largeur par rapport à celle des lentilles frontales et sur lesquels les faces de sortie (FS) et/ou les chanfreins (CH) des lentilles frontales (LF) sont appliqués par collage et/ou serrage.

6. Dispositif selon l'une quelconque des précédentes revendications, caractérisé en ce que les lentilles frontales (LF) sont du type convexe-plan, biconvexe ou convexe-concave.

7. Dispositif selon l'une des revendications précédentes, caractérisé en ce que les lentilles frontales (LF) sont agencées selon une matrice oblique ou rectangulaire droite.

8. Dispositif selon l'une des revendications précédentes, caractérisé en ce que les lentilles frontales (LF) sont agencées de telle sorte que la section transversale du faisceau de lumière issu d'une lentille frontale (LF) est rectangulaire ou hexagonale.

9. Dispositif selon l'une des revendications précédentes, caractérisé en ce que les lentilles frontales sont convergentes ou divergentes.

10. Dispositif selon l'une des revendications précédentes, caractérisé en ce que le dispositif homogénéiseur comprend une lentille de collection (LC) couplée aux lentilles frontales, le couplement optique étant afocal ou non.

## Patentansprüche

1. Optische Vorrichtung zur Homogenisierung eines aus einer Quelle in einer vorbestimmten Fortpflanzungsrichtung austretenden Laserstrahls (FLA), die eine Vielzahl von aneinanderstoßenden Frontlinsen (LF) aufweist, die in einer Ebene in m Zeilen und n Spalten angeordnet sind und dafür ausgelegt sind, den sich senkrecht zu dieser Ebene fortpflanzenden, zu homogenisierenden Laserstrahl in m x n Laserstrahlen zu zerschneiden, die jeweils einen Querschnitt von gleichmäßiger geometrischer Form sowie eine in den Querschnitt homogene räumliche Verteilung der Lichtstärke aufweisen,
dadurch gekennzeichnet, daß
sie Einrichtungen zur Verbindung durch Verkleben und/oder Festklemmen aufweist, die dafür ausgelegt sind, die Frontlinsen einzeln stumpf und ohne Zwischenraum miteinander zu verbinden, wobei diese Verbindungsmittel Klebstoff und/oder Klemmelemente sowie Nuten (EN) und/oder Abschrägungen (CH) umfassen, die in den Linsen (LF) vorgesehen sind, um zur Aufnahme des Klebstoffs und/oder der Klemmelemente zu dienen, so daß die Verbindungsmittel den Gang der Lichtstrahlen nicht stören, welche die auf diese Weise miteinander verbundenen Frontlinsen (LF) durchqueren.

2. Vorrichtung nach Anspruch 1,
dadurch gekennzeichnet, daß
jede Frontlinse allgemein die Form eines Parallelepipeds mit einer Eintrittsfläche (FE), einer Austrittsfläche (FS) und vier Seitenflächen (FL1 - FL4) hat.

3. Vorrichtung nach Anspruch 2,
dadurch gekennzeichnet, daß
mindestens eine Seitenfläche (FL1) einer der Frontlinsen (LF2), die dazu bestimmt ist, mit einer Seitenfläche einer benachbarten Frontlinse (LF1) verbunden zu werden, eine Quernut (EN4) und/oder eine Abschrägung (CH) aufweist, die jeweils in Nähe und/oder auf der Austrittsfläche (FS) dieser Frontlinse (LF2) angeordnet sind.

4. Vorrichtung nach Anspruch 1,
dadurch gekennzeichnet, daß
die Klemmelemente einen Rahmen umfassen, der die Vielzahl von Frontlinsen (LF) umgibt, sowie Drähte und/oder Stifte, die mit dem Rahmen fest verbunden sind und die von den in Nähe der Austrittsflächen der Frontlinsen vorgesehenen Nuten (EN) aufgenommen werden.

5. Vorrichtung nach Anspruch 1,
dadurch gekennzeichnet, daß
die Verbindungsmittel ein Gitter umfassen, das eine Vielzahl von Stäben (BX1 - BX4) mit bezüglich der Breite der Front linsen kleiner Breite aufweist, an welche die Austrittsflächen (FS) und/oder die Abschrägungen (CH) der Frontlinsen (LF) durch Verkleben und/oder durch Klemmung angesetzt sind.

6. Vorrichtung nach einem der vorhergehenden Ansprüche,
dadurch gekennzeichnet, daß
die Frontlinsen (LF) plankonvex, bikonvex oder konvex-konkav sind.

7. Vorrichtung nach einem der vorhergehenden Ansprüche,
dadurch gekennzeichnet, daß
die Frontlinsen (LF) in einer schrägen oder geraden rechtwinkligen Matrix angeordnet sind.

8. Vorrichtung nach einem der vorhergehenden Ansprüche,
dadurch gekennzeichnet, daß
die Frontlinsen (LF) so ausgebildet sind, daß der Querschnitt des aus einer Frontlinse (LF) austretenden Lichtstrahls rechteckig oder sechseckig ist.

9. Vorrichtung nach einem der vorhergehenden Ansprüche,
dadurch gekennzeichnet, daß die Frontlinsen konvergierend oder divergierend sind.

10. Vorrichtung nach einem der vorhergehenden Ansprüche,
dadurch gekennzeichnet, daß
die Homogenisierungsvorrichtung eine mit den Frontlinsen gekoppelte Sammellinse (LC) umfaßt, wobei die optische Koppelung afokal ist oder nicht.

## Claims

1. An optical device for homogenising a laser beam (FLA) emanating from a source in a predetermined direction of propagation, the said device comprising a plurality of contiguous front lenses (LF) disposed on a plane in m rows and n columns and able to divide the laser beam to be homogenised and propagating perpendicularly to the said plane into m x n laser beams each having a substantially uniform geometrical cross-section and a spatial distribution of light intensity in the cross section, characterised in that it comprises means of assembly by bonding and/or clamping able to connect the front lenses to each other individually edge to edge and without gaps, the said assembly means comprising adhesive and/or clamping elements as well as grooves (EN) and/or bevels (CH) formed in the lenses (LF) to serve as a housing for the said adhesive and/or for the said clamping elements so that the said assembly means do not interfere with the path of the light beams passing through the said front lenses (LF) thus connected.

2. Device as claimed in claim 1, wherein each front lens is parallelepipedal in shape overall with an entry face (FE), an exit face (FS) and four lateral faces (FL1-FL4).

3. Device as claimed in claim 2, wherein at least one lateral face (FL1) of one of the front lenses (LF2) designed to be connected to a lateral face of an adjacent front lens (LF1) comprises a transverse groove (EN4) and/or a bevel (CH) formed respectively in the vicinity of and/or on the exit face (FS) of the said front lens (LF2).

4. Device as claimed in claim 1, wherein the clamping elements comprise a frame surrounding the plurality of front lenses (LF) and wires and/or rods fixed to the said frame and housed in the grooves (EN) formed in the vicinity of the exit faces of the front lenses.

5. Device as claimed in claim 1, wherein the assembly means comprise a grille having a plurality of bars (B X 1-B X 4) which have a width which is small compared with that of the front lenses and to which the exit faces (FS) and/or bevels (CH) of the front lenses (LF) are applied by bonding and/or clamping.

6. Device as claimed in any one of the preceding claims, wherein the front lenses (LF) are of the convex/plane, biconvex or convex/concave type.

7. Device as claimed in one of the preceding claims, wherein the front lenses (LF) are arranged in a straight rectangular or oblique matrix.

8. Device as claimed in one of the preceding claims, wherein the front lenses (LF) are arranged so that the cross-section of the light beam coming from the front lens (LF) is rectangular or hexagonal.

9. Device as claimed in one of the preceding claims, wherein the front lenses are convergent or divergent.

10. Device as claimed in one of the preceding claims, wherein the homogenising device comprises a collection lens (LC) coupled to the front lenses, the optical coupling being afocal or not.
